(19) Europäisches Patentamt
European Patent Office
Office européen des brevets

(11) EP 2 878 630 B1

(12) EUROPÄISCHE PATENTSCHRIFT

(45) Veröffentlichungstag und Bekanntmachung des Hinweises auf die Patenterteilung:
**20.11.2019 Patentblatt 2019/47**

(21) Anmeldenummer: **13194835.8**

(22) Anmeldetag: **28.11.2013**

(51) Int Cl.:
***C08L 77/06*** *(2006.01)*
*C08K 5/04* *(2006.01)*
*C08K 5/5313* *(2006.01)*
*C08K 5/3492* *(2006.01)*
*C08K 7/14* *(2006.01)*
*C08K 5/00* *(2006.01)*
*C08K 3/38* *(2006.01)*

(54) **Polyamidzusammensetzungen**

Polyamide compositions

Compositions en polyamide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2015 Patentblatt 2015/23**

(73) Patentinhaber: **LANXESS Deutschland GmbH**
**50569 Köln (DE)**

(72) Erfinder:
- **Endtner, Jochen, Dr.**
  **50679 Köln (DE)**
- **Immel, Timo, Dr.**
  **41539 Dormagen (DE)**
- **Bienmüller, Matthias, Dr.**
  **47803 Krefeld (DE)**

(56) Entgegenhaltungen:
**EP-A1- 0 997 496**
**WO-A1-99/45070**
**WO-A1-2004/090036**
**WO-A1-2013/014144**
**WO-A1-2013/188488**
**WO-A2-2011/126794**

- **Gregory Lau: "Material Selection of Electronic Components -Zytel High Temperature Nylon HTN and Zentie", Power Electronics Systems and Applications, 2006. ICPESA '06. 2nd International Conference on,20061101 , 1. November 2006 (2006-11-01), XP055116161, Gefunden im Internet: URL:http://www.eeic.org/member/papers/DuPontIEEEpaper.pdf [gefunden am 2014-05-02]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Zusammensetzungen auf Basis von Polyamidblends und Zusatzstoffen, die Verwendung dieser Zusammensetzungen zur Herstellung kurzzeitwärmeformbeständiger Erzeugnisse, sowie ein Verfahren zur Herstellung kurzzeitwärmeformbeständiger Polyamid-basierter Erzeugnisse, insbesondere für Elektro- oder Elektronikanwendungen.

Viele elektronische und elektrische Baugruppen und Komponenten umfassen temperaturempfindliche elektrische und/oder elektronische Erzeugnisse, insbesondere wärmeempfindliche integrierte Schaltkreise, Oszillatorkristalle, sowie optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können. Um ein gutes Lötergebnis zu erreichen, müssen die Erzeugnisse während des Lötens über längere Zeiten hinweg erhöhten Temperaturen ausgesetzt werden. So wird z.B. beim Wellenlöten das auf die Platine gesteckte Erzeugnis zunächst langsam auf etwa 100 °C Grad aufgewärmt. Danach erfolgt die eigentliche Lötung, die typischerweise bei 260 bis 285 °C Grad erfolgt und mindestens 5 Sekunden dauert, gefolgt von der Erstarrungsphase, während das Erzeugnis über mehrere Minuten langsam abkühlt.

Gemäß "http://de.wikipedia.org/wiki/Wellenl%C3%B6ten" ist das Wellenlöten, auch als Schwalllöten bezeichnet, ein Lötverfahren, mit dem elektronische Baugruppen (Leiterplatten, Flachbaugruppen) halb- oder vollautomatisch nach dem Bestücken gelötet werden. Die Lötseite der Leiterplatte wird zunächst im Fluxer mit einem Flussmittel benetzt. Danach wird die Leiterplatte mittels Konvektionsheizung (Verwirbelung der Wärme, wodurch praktisch überall, auch auf der Oberseite, die gleiche Temperatur anliegt), Wendelheizung oder Infrarot-Strahlern vorgeheizt. Dies geschieht zum einen, um den Lösungsmittelanteil des Flussmittels zu verdampfen (sonst Blasenbildung beim Lötvorgang), die chemische Wirkung der Aktivatoren zu erhöhen und um einen Temperaturverzug der Baugruppe sowie Schädigung der Bauteile durch einen zu steilen Temperaturanstieg beim nachfolgenden Löten zu vermeiden.

Genaue Daten ergeben sich durch Temperaturprofile. Dabei werden an einer Musterplatine Temperaturfühler an relevanten Punkten angebracht und mit einem Messgerät aufgezeichnet. So erhält man Temperaturkurven für die Platinenober- und unterseite für ausgewählte Bauteile. Im Anschluss daran wird die Baugruppe über eine oder zwei Lötwellen gefahren. Die Lötwelle wird durch Pumpen von flüssigem Lot durch eine Öffnung erzeugt. Die Löttemperatur liegt bei bleihaltigen Loten bei ca. 250 °C, bei den wegen der Verhinderung bleihaltiger Dämpfe bevorzugt zu verwendenden bleifreien Loten ca. 10 °C bis 35 °C höher, also bei 260 °C bis 285 °C.

Die Lötzeit ist so zu wählen, dass die Erwärmung weder die Leiterplatte noch die wärmeempfindlichen Bauelemente schädigt. Die Lötzeit ist die Berührzeit des flüssigen Lotes pro Lötstelle. Die Richtzeiten betragen für einseitig kaschierte Leiterplatten weniger als eine Sekunde und bei zweiseitig kaschierten Leiterplatten nicht mehr als zwei Sekunden. Bei Mehrleiterplatten gelten individuelle Lötzeiten bis hin zu sechs Sekunden. Nach DIN EN 61760-1: 1998 ist die maximale Zeit für eine oder auch zwei Wellen zusammen 10 Sekunden. Genauere Details sind der oben genannten Literaturstelle zu entnehmen. Nach dem Löten ist eine Kühlung der Baugruppe sinnvoll, um die thermische Belastung schnell wieder zu verringern. Dies geschieht über eine direkte Kühlung durch ein Kühlaggregat (Klimaanlage) unmittelbar nach dem Lötbereich und/oder durch konventionelle Lüfter in der Senkstation oder einem Kühltunnel im Rücklaufband.

Hieraus ergeben sich an die verwendeten Materialien, insbesondere für die aus ökologischen Gründen immer häufiger eingesetzten bleifreien Lote mit erhöhten Schmelzbereichen, hohe Anforderungen hinsichtlich der Kurzzeitwärmeformbeständigkeit. Des Weiteren müssen derartige Materialien eine sehr gute Alterungsbeständigkeit unter den bei der Anwendung auftretenden Temperaturen haben.

Thermoplastische Polyamide wie Polyamid 6 (PA6) und Polyamid 66 (PA66) sind wegen ihrer guten Verarbeitbarkeit, der hohen mechanischen Belastbarkeit, ihrer Beständigkeit gegen eine Vielzahl von Prozesschemikalien, insbesondere aber auch wegen ihrer hohen Hydrolysestabilität, für Elektro- und Elektronikanwendungen besonders geeignet. Dies gilt insbesondere auch für Anwendungen im Außenbereich. Allerdings stoßen rein aliphatische Polyamide wie PA6 oder PA66 wegen ihrer Schmelzbereiche um 220 °C bzw. 260 °C rasch an ihre Grenzen, wenn im Herstellungsprozess von elektrischen oder elektronischen Erzeugnissen.- wie etwa beim Verlöten mit bleifreien Loten - Prozessschritte mit Temperaturen oberhalb des Schmelzpunktes dieser Polyamide vorkommen.

Gemäß dem Stand der Technik wäre innerhalb der aliphatischen Polyamide dann z.B. ein Ausweichen auf Polyamid 4.6 (PA46) mit einem Schmelzbereich um 290 °C möglich. Allerdings ist man bei den für PA46 empfohlenen Verarbeitungstemperaturen, idealerweise zwischen 310 und 320 °C bei der Auswahl geeigneter Additive sehr eingeschränkt. Dies gilt insbesondere bei thermisch empfindlichen, aber z.B. in PA66 noch gut einsetzbaren Flammschutzmitteln wie insbesondere roter Phosphor, Melaminpolyphosphat oder Aluminium-tris(diethylphosphinat). Beim Einsatz dieser Flammschutzmittel in PA46 besteht aufgrund der höheren Verarbeitungstemperaturen ein erhöhtes Einsatz dieser Flammschutzmittel in PA46 besteht aufgrund der höheren Verarbeitungstemperaturen ein erhöhtes Zersetzungsrisiko

solcher Additive und damit z.B. eine erhöhte Neigung zu Metallkorrosion, beispielsweise im Falle der Verarbeitung von z.B. Kunststoff-Metall-Hybrid Erzeugnissen, oder Belagsbildung. Eine weitere Schwierigkeit bei PA46 ist die gegenüber PA6 und PA66 erhöhte Wasseraufnahme, die zudem auch eine stärkere Dimensionsänderung der aus PA46 hergestellten Erzeugnisse zur Folge hat.

Alternativ zu PA46 ist ein Ausweichen auf teilkristalline teilaromatische Polyamide denkbar, wie sie z.B. durch Einbau von Terephthalsäure in die Polyamidstruktur erhalten werden können. Beispiele hierfür sind PA6T/6, PA6T/66 oder PA6T/6I/66, wobei "T" für Terephthalsäure, "I" für Isophthalsäure und "/" für ein Coplymer steht. Diese Materialien bieten gegenüber PA46 den Vorteil einer geringeren Wasseraufhahme. Auch können Schmelzbereiche oberhalb von 300 °C erreicht werden. Neben den bei PA46 genannten Einschränkungen bzgl. thermisch empfindlicher Additive hat man bei den teilaromatischen Polyamiden allerdings noch Einschränkungen aufgrund der deutlich höheren Schmelzviskosität und einer verringerten Kristallisationsgeschwindigkeit zu berücksichtigen (Ludwig Bottenbruch, Rudolf Binsack (Hrsg): Technische Thermoplaste Teil 4. Polyamide. Hanser Verlag München,S. 803-809)

EP 0 997 496 A1 beschreibt im Beispiel 16 auf der Seite 11 eine Zusammensetzung enthaltend eine Mischung aus PA66, PA6T/12, Glasfasern und einem Thermostabilisator (CuJ/KJ), wobei der Schmelzpunkt des PA6T/12 300°C beträgt.

Die Aufgabe der vorliegenden Erfindung bestand deshalb darin, Zusammensetzungen auf Basis thermoplastischer Polyamide zur Verfügung zu stellen, die zum einen eine gegenüber PA66 verbesserte Kurzzeitwärmeformbeständigkeit aufweisen, andererseits aber mit den für PA66 üblichen niedrigen Temperaturen verarbeitbar sind, dadurch weniger Einschränkungen bei der Auswahl von thermisch empfindlichen Additiven, insbesondere Flammschutzmitteln, haben und gute mechanische Eigenschaften aufweisen.

Gute mechanische Eigenschaften im Sinne der vorliegenden Erfindung zeichnen sich im Falle herzustellender Erzeugnisse insbesondere durch hohe Werte bei der Biegefestigkeit und dem Biegemodul, möglichst gleichbleibende Wärmeformbeständigkeit (HDT A Wert) sowie in Bezug auf Flammfestigkeit durch hohe GWIT Werte aus.

Die Biegefestigkeit in der technischen Mechanik ist ein Weit für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper vorzugsweise mit den Abmessungen 80 mm · 10 mm · 4mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird der Biegemodul im 3-Punkt-Biegeversuch ermittelt, wobei eine Prüfprobe auf zwei Auflagen positioniert und in der Mitte mit einem Prüfstempel belastet wird. Dies ist wahrscheinlich die am häufigsten verwendete Form des Biegeversuches. Der Biegemodul berechnet sich bei einer Flachprobe dann wie folgt:

$$E = \frac{l_v^3 (X_H - X_L)}{4 D_L b a^3}$$

wobei E = Biegemodul in kN/mm$^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm.

Die Wärmeformbeständigkeit ist ein Maß für die Temperaturbelastbarkeit von Kunststoffen. Wegen deren viskoelastischen Materialverhaltens gibt es für Kunststoffe keine streng definierte obere Einsatztemperatur, stattdessen wird eine Ersatzgröße unter definierter Last bestimmt. Eine Methode ist die Prüfung der Wärmeformbeständigkeit nach DIN EN ISO 75-1,-2,-3 (Vorläufer: DIN 53461) wonach zur Bestimmung der Wärmeformbeständigkeitstemperatur ein Standardprobekörper mit rechteckigem Querschnitt verwendet wird, der bevorzugt flachkant einer Dreipunktbiegung bei konstanter Last ausgesetzt wird. Je nach Probekörperhöhe wird dabei zur Erzielung einer sogenannten Randfaserspannung $\sigma_f$ von 1,80 N/mm$^2$ (Methode A) durch Gewichtsstücke oder/und Federn eine Kraft

$$F = \frac{2\sigma_f b h^2}{3L}$$

aufgebracht, wobei $b$ = Probenbreite, h = Probenhöhe und L = Auflagerabstand bedeuten.

Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so ist die zugehörige

Temperatur die Wärmeformbeständigkeitstemperatur HDT (engl. heat deflection temperature oder heat distortion temperature).

Der GWIT Wert wird durch Glühdrahtprüfungen an Enderzeugnissen und Werkstoffen gemäß IEC 60695-2-13 ermittelt. Die Europäische Norm EN 60335-1 "Sicherheit elektrischer Geräte für den Hausgebrauch und ähnliche Zwecke Teil 1: Allgemeine Anforderungen" enthält in Abschnitt 30 "Widerstand gegen Feuer und Wärme" spezifische Sicherheitsanforderungen, die mit Hilfe der in EN/IEC 606952-10 bis 13 beschriebenen Tests erfüllt werden müssen, wobei IEC 60695-2-13 die Prüfungen mit dem Glühdraht für die Entzündbarkeit von Werkstoffen (GWIT) betrifft. Für unbeaufsichtigte Haushaltsgeräte >0.2 A gibt es gemäß EN 60335-1, Abschnitt 30 die Anforderung IEC 60695-2-13, einer Entzündbarkeit von Werkstoffen (GWIT) 775°C < 5 s.

Der Versuchsablauf beim GWIT Test ist wie folgt: Die Proben werden in Schritten von 50°C von 500 bis 900°C und bei 960°C 30 s dem Glühdraht ausgesetzt. Die Probe wird als entzündet eingestuft, wenn sie mehr als 5 s brennt. Die Temperatur, bei welcher das Material in 3 Versuchen sich nicht entzündet (Beispiel: 750°C) plus 25 K, wird als GWIT (775°C) bezeichnet.

Die 5 s Entzündbarkeitsanforderung ist sehr streng und manche flammgeschützte Kunststoffe, die die Einstufung UL94 V0 erreichen, fallen durch, da sie erst kurz nach den 5 s verlöschen. Kunststoffe mit Flammschutzmitteln, die in der Gasphase wirken, sind hier besonders betroffen.

Um den GWIT Test zu verbessern, wurde 2007 ein Rundversuch unter Beteiligung von Industrie und VDE (Verband der Elektrotechnik Elektronik Informationstechnik e.V.) durchgeführt. Die Ergebnisse wurden im Rahmen eines internationalen IEC/TC 89 Rundversuchs unter anderem zur Verbesserung der GWIT Prüfverfahren mit berücksichtigt. Die Rundversuche zeigten, dass Prüfumgebung, Prüfkammer, Glühdraht und Temperaturmessung nicht genau definiert sind und zu streuenden Ergebnissen führen können. Mit der Ausnahme von Corona-Erscheinungen, die nicht mehr als Flammen gelten, werden die gewonnenen Erkenntnisse jedoch sehr wahrscheinlich nicht zu größeren Änderungen in den Überarbeitungen der GWIT Normen führen.

Lösung der Aufgabe und Gegenstand der vorliegenden Erfindung sind Zusammensetzungen enthaltend

a) 15 bis 90 Gew.- %, bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% wenigstens eines thermoplastischen Polyamids aus der Gruppe Polyamid 46 und/oder der teilaromatischen Copolyamide enthaltend Terephthalsäure als Monomerbaustein und mit einem Schmelzpunkt im Bereich von 270° C bis 330° C, wobei der Anteil dieser Komponente b) bzw. Komponenten b) bezogen auf die Summe aller enthaltener thermoplastischen Polymere in der Zusammensetzung bei 5 bis 40 Gew.-%, bevorzugt, 10 bis 30 Gew.-%, besonders bevorzugt bei 15-25 Gew.-% liegt,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew.- % wenigstens eines Thermostabilisators,

wobei die Summe aller Gewichtsprozente der Komponenten stets 100 ergibt und diese zusätzlich zu den Komponenten a), b), c) und d) noch e) 0,01 bis 5 Gew.-% Dipentaerythriol und/oderTripentaerythritol enthalten, wobei die übrigen Komponenten soweit reduziert werden, dass die Summe der Gewichtsprozente stets 100 ergibt.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

Das als Komponente a) einzusetzende PA66 ist ein teilkristallines Polyamid. Die Kennzeichnung der Polyamide im Rahmen der vorliegenden Erfindung entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer $\alpha,\omega$ - Aminocarbonsaure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976. Gemäß DE 10 2011 084 519 A1 besitzen teilkristalline Polyamide eine Schmelzenthalpie von mehr als 25 J/g, gemessen mit der DSC-Methode gemäß ISO 11357 beim 2. Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode gemäß ISO 11357 beim 2. Aufheizen und Integration des Schmelzpeaks und von den amorphen Polyamiden mit einer Schmelzenthalpie von weniger als 4 J/g, gemessen mit der DSC-Methode gemäß ISO 11357 beim 2. Aufheizen und Integration des Schmelzpeaks. Erfindungsgemäß als Komponente a) einzusetzendes teilkristallines PA66 ist beispielsweise unter der Bezeichnung Durethan® A30 bei der Lanxess Deutschland GmbH, Köln, Deutschland erhältlich.

Als Komponente b) wird wenigstens ein thermoplastisches Polyamid aus der Gruppe Polyamid 46 oder der

teilaromatischen Copolyamide mit Terephthalsäure als Monomerbaustein und einem Schmelzpunkt im Bereich von 270° C bis 330° C eingesetzt. Als bevorzugte teilaromatische Copolyamide haben sich solche erwiesen, deren Triamingehalt weniger als 0,5 Gew.-%, vorzugsweise weniger als 0,3 Gew.-% beträgt (siehe EP-A 299 444), insbesondere PA 6T/6 und PA 6T/66. Weitere hochtemperaturbeständige Polyamide sind aus der EP-A 19 94 075 bekannt. Die Herstellung der bevorzugten teilaromatischen Copolyamide mit niedrigem Triamingehalt kann nach den in EP-A 129 195 und EP-A 129 196 beschriebenen Verfahren erfolgen. Ein erfindungsgemäß insbesondere bevorzugt einzusetzendes Copolyamid mit Terephthalsäure und einem Schmelzpunkt im Bereich von 270° C bis 330° C ist PA6T/6, das beispielsweise unter der Bezeichnung Ultramid® T bei der BASF SE, Ludwigshafen, Deutschland erhältlich ist (siehe auch Ultramid® (PA) Hauptbroschüre der BASF SE, August 2013). PA6T/6 wird aus Hexa methylendiamin, Terephthalsäure und Caprolactam hergestellt und weist einen Schmelzpunkt von 295 °C auf. Ferner sind insbesondere bevorzugt einzusetzen PA6T/66, PA6T/6I oder PA6T/6I/66.

Die erfindungsgemäß als Komponente c) einzusetzenden Glasfasern haben bevorzugt einen Faserdurchmesser im Bereich von 7 und 18 μm, besonders bevorzugt im Bereich von 9 und 15 μm, und werden als Endlosfasern oder als geschnittene oder gemahlene Glasfasern zugesetzt. Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

$$(X\text{-}(CH_2)_q)k\text{-}Si\text{-}(O\text{-}CrH_2r+1)_4\text{-}k \qquad (I)$$

in der die Substituenten folgende Bedeutung haben:

X: $NH_2$-, HO-,

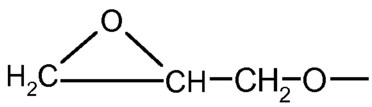

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen von 0,05 bis 2 Gew.-%, besonders bevorzugt 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse bzw. zum Formkörper in der Formmasse bzw. im Formkörper kürzere Längenverteilungen als ursprünglich eingesetzt aufweisen.

Als Komponente d) wird wenigstens ein Thermostabilisator eingesetzt. Bevorzugt auszuwählende Thermostabilisatoren werden ausgewählt aus der Gruppe der sterisch gehinderten Phenole, wobei es sich um Verbindungen mit phenolischer Struktur handelt, die am phenolischen Ring mindestens eine sterisch anspruchsvolle Gruppe aufweisen. Sterisch anspruchsvolle Gruppen im Sinne der vorliegenden Erfindung sind bevorzugt tert.-Butylgruppen, Isopropylgruppen und mit sterisch anspruchsvollen Gruppen substituierte Arylgruppen. Sterisch anspruchsvolle Gruppen im Sinne der vorliegenden Erfindung sind insbesondere tert.-Butylgruppen. Besonders bevorzugte Thermostabilisatoren sind sterisch gehinderte Phenole enthaltend wenigstens eine Struktur der Formel (II),

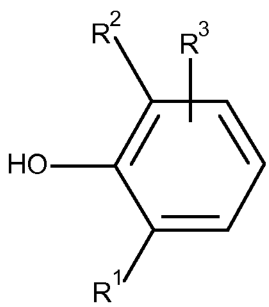

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht. Ganz besonders bevorzugte Thermostabilisatorn der Formel (II) werden als Antioxidantien beispielsweise in der DE-A 27 02 661 (US-A 4 360 617) beschrieben, deren Inhalt von der vorliegenden Anmeldung vollumfänglich umfasst wird. Eine weitere Gruppe bevorzugter sterisch gehinderter Phenole leiten sich von substituierten Benzolcarbonsäuren ab, insbesondere von substituierten Benzolpropionsäuren. Besonders bevorzugte Verbindungen aus dieser Klasse sind Verbindungen der Formel (III)

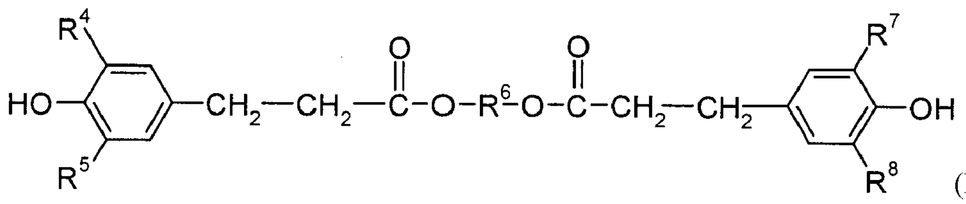

(III)

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann. Beispiele für Verbindungen der Formel (III) sind Verbindungen der Formeln (IV), (V) und (VI).

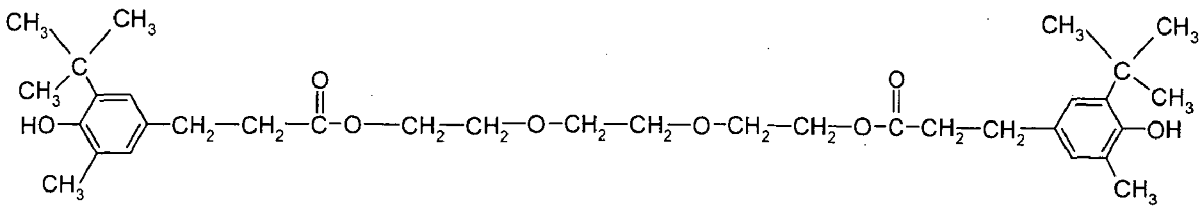

(IV) (Irganox® 245 der Firma BASF SE)

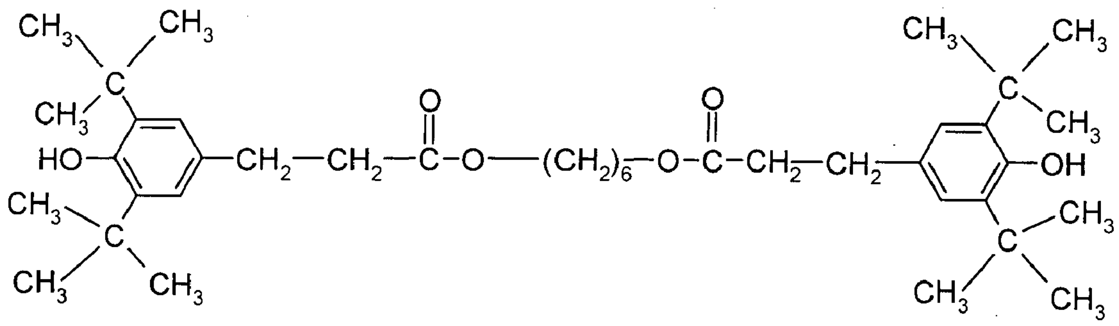

(V) (Irganox® 259 der Firma BASF SE)

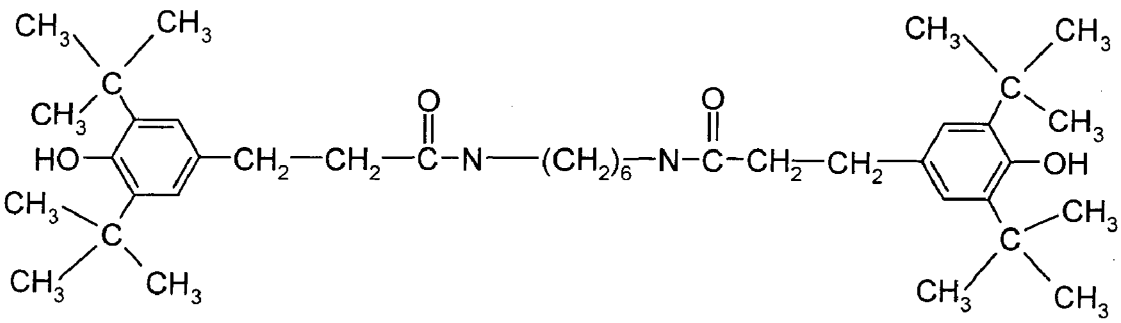

(VI) (Irganox® 1098 der Firma BASF SE)

Ganz besonders bevorzugte Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-l-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thio-triazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin. sowie N,N'-Hexamethyten-bis-3,5-di-tert.-butyl-4-hydroxyhydrocinnamid (Irganox® 1098) und das vorstehend beschriebene Irganox® 245 der Firma BASF SE, Ludwigshafen, Deutschland,

Erfindungsgemäß insbesondere ganz besonders bevorzugt wird N,N'-Hexamethylen-bis-3,5-di-tert.-butyl-4-hydroxyhydrocinnamid, CAS No. 23128-74-7, als Thermostabilisator eingesetzt, das als Irganox® 1098 bei der BASF SE, Ludwigshafen, Deutschland erhältlich ist.

Die vorliegende Erfindung betrifft ferner Zusammensetzungen enthaltend zusätzlich zu den Komponenten a), b), c), d) noch

e) bevorzugt 0,5 bis 3 Gew.-%, besonders bevorzugt 1 bis 2 Gew.-% Dipentaerythritol [CAS-Nr. 126-58-9] und/oder Tripentaerythritol [CAS-Nr.78-24-0], wobei die übrigen Komponenten soweit reduziert werden, dass die Summe aller Gewichtsprozente stets 100 ergibt.

In einer bevorzugten Ausführungsform betrifft die vorliegende Erfindung Zusammensetzungen enthaltend zusätzlich zu den Komponenten a) bis e) noch

f) 1 bis 55 Gew.-%, bevorzugt 2 bis 30 Gew.-%, besonders bevorzugt 5 bis 20 Gew.-% wenigstens eines Flammschutzmittels, wobei die übrigen Komponenten soweit reduziert werden, dass die Summe aller Gewichtsprozente stets 100 ergibt.

Bevorzugte Flammschutzmittel sind handelsübliche organische Halogenverbindungen mit Synergisten oder handelsübliche organische Stickstoffverbindungen oder organisch/anorganische Phosphorverbindungen, die einzeln oder im Gemisch miteinander eingesetzt werden. Auch mineralische Flammschutzadditive wie Magnesiumhydroxid oder Ca-Mg-Carbonat-Hydrate (z.B. DE-A 4 236) können eingesetzt werden. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether genannt. Als Phosphorverbindungen sind die Phosphorverbindungen gemäß WO-A 98/17720 (= US 6 538 024) geeignet, bevorzugt roter Phosphor, Metallphosphinatc, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate)], Triphenylphosphat (TPP), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(di-ethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und (diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(di-ethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen. Als Stickstoffverbindungen kommen insbesondere Melamin oder Melamincyanurat, Reaktionsprodukte aus Trichlortriazin, Piperazin und Morpholin gemäß CAS-Nr. 1078142-02-5 (z.B. MCA PPM Triazin HF der Fa. MCA Technologies GmbH, Biel-Benken, Schweiz) in Frage. Als Synergisten sind bevorzugt Antimonverbindungen, insbesondere Antimontrioxid oder Antimonpentoxid, Zinkverbindungen, Zinnverbindungen, insbesondere Zinkstannat oder Borate, insbesondere Zinkborate geeignet.

Auch können dem Flammschutzmittel sogenannte Kohlenstoffbildner und Tetrafluorethylenpolymerisate zugesetzt werden

Untern den halogenhaltigen Flammschutzmitteln werden besonders bevorzugt bromierte Polystyrole wie z.B. Firemaster® PBS64 (Great Lakes, West Lafayette, USA) oder bromierte Phenylenether jeweils insbesondere bevorzugt in Kombination mit Antimontrioxid und/oder Zinkstannaten als Synergisten eingesetzt. Unter den halogenfreien Flammschutzmitteln werden besonders bevorzugt Aluminium-tris(diethylphosphinat) in Kombination mit Melaminpolyphosphat (z.B. Melapur® 200/70 der BASF SE, Ludwigshafen, Deutschland) und Zinkborat (z.B. Firebrake® 500 oder Firebrake® ZB der RioTinto Minerals, Greenwood Village, USA) oder Aluminium-tris(diethylphosphinat) in Kombination mit Aluminumphosphonat und/oder Aluminiumphosphonathydrat eingesetzt.

Insbesondere ganz besonders bevorzugt wird als Flammschutzmittel Aluminium-tris(diethylphosphinat) (z.B. Exolit® OP1230 der Clariant International Ltd. Muttenz, Schweiz) (CAS Nr. 225789-38-8) in einer Kombination mit Melaminpolyphosphat (Melapur 200/70) und Zinkborat (Firebrake 500) eingesetzt.

In einer bevorzugten Ausführungsform enthalten die erfindungsgemäßen Zusammensetzungen zusätzlich zu den Komponenten a) bis f) oder anstelle der Komponenten e) und/oder f) noch

g) 0,01 bis 10 Gew.-%, bevorzugt 0,1 bis 7 Gew.-%, besonders bevorzugt 0,5 bis 5 Gew.-% mindestens eines kettenverlängernd wirkenden Additives aus der Reihe der Bisphenol-Diglycidylether, der Epoxy-Kresol-Novolake oder der Epoxy-Phenol-Novolake, wobei die übrigen Komponenten soweit reduziert werden, dass die Summe aller Gewichtsprozente stets 100 ergibt.

Epoxy-Phenol-Novolake bzw. Epoxy-Kresol-Novolake können als Kondensationsprodukte von Phenol bzw. Kresol mit Formaldehyd und nachfolgender Umsetzung mit Epichlorhydrin erhalten werden. Ein Beispiel ist das Araldite® ECN 1280-1 der Fa. Huntsman, Everberg, Belgien.

Bevorzugt werden Bisphenol-Diglycidylether eingesetzt. Diese können durch Reaktionen von Bisphenol-Derivaten mit Epichlorhydrin erhalten werden. Bevorzugte Bisphenol-Komponenten sind 2,2-Bis(4-hydroxyphenyl)propan (Bisphenol A), 1,1-Bis(4-hydroxyphenyl)-1-phenyl-ethan (Bisphenol AP), Bis(4-hydroxyphenyl)sulfon (Bisphenol S) und Bis(4-hydroxydiphenyl)methan (Bisphenol F), wobei Bisphenol-A besonders bevorzugt ist.

Ganz besonders bevorzugt sind feste Bisphenol-A-Diglycidylether mit einem Erweichungspunkt oberhalb von 60°C wie z.B. das Araldite® GT7071 der Fa. Huntsman, Everberg, Belgien.

In einer bevorzugten Ausführungsform enthalten die erfindungsgemäßen Zusammensetzungen zusätzlich zu den Komponenten a) bis g) oder anstelle der Komponenten e) und/oder f) und/oder g) noch

h) 0,01 bis 20 Gew.-%, bevorzugt 0,01 bis 10 Gew.-%, besonders bevorzugt 0,01 bis 5 Gew.-% wenigstens eines sonstigen, von den Komponenten c) bis g) unterschiedlichen Additivs, wobei die übrigen Komponenten soweit reduziert werden, dass die Summe aller Gewichtsprozente stets 100 ergibt.

Übliche Additive der Komponente h) sind bevorzugt Stabilisatoren, Entformungsmittel, UV-Stabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Säurefänger, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Bevorzugte Entformungsmittel werden ausgewählt aus der Reihe Esterwachse, Pentaerytritoltetrastearat

(PETS), langkettige Fettsäuren, Salze langkettiger Fettsäuren, Amidderivate langkettiger Fettsäuren oder Montanwachse, sowie niedermolekulare Polyethylen- bzw. Polypropylenwachse oder Ethylen Homopolymer Wachse.

Bevorzugte langkettige Fettsäuren sind Stearinsäure oder Behensäure. Bevorzugte Salze der langkettigen Fettsäuren sind Calciumstearat oder Zinkstearat. Bevorzugtes Amidderivat langkettiger Fettsäuren ist Ethylen-bis-stearylamid. Bevorzugtes Montanwachs sind Mischungen aus geradkettigen, gesättigten Carbonsäuren mit Kettenlängen von 28 bis 32 C-Atomen.

Als Pigmente bzw. Farbstoffe können bevorzugt Zinksulfid, Titandioxid, Ultramarinblau, Eisenoxid, Ruß, Phthalocyanine, Chinacridone, Perylene, Nigrosin und Anthrachinone eingesetzt werden. Das als Pigment bevorzugt einzusetzende Titandioxid hat bevorzugt eine mittlere Teilchengröße im Bereich von 90 nm bis 2000 nm. Für das erfindungsgemäß als Pigment bevorzugt einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 % ; beim SP-Grundkörper durch eine Dotierung z. B. mit Al, Sb, Nb oder Zn. Besonders bevorzugt, um eine hinreichend hohe Helligkeit der aus den erfindungsgemäßen Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau. Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß aus Komponente h) insbesondere bevorzugt als Pigment einzusetzendes Titandioxid weist bevorzugt eine mittlere Teilchengröße im Bereich von 90 nm bis 2000 nm, bevorzugt im Bereich von 200 nm bis 800 nm auf.

Kommerziell erhältliche Produkte sind beispielsweise Kronos® 2230, Kronos® 2225 und Kronos® vlp7000 der Fa. Kronos, Dallas, USA.

Als Nukleierungsmittel werden bevorzugt Talkum, Natrium- oder Calciumphenylphosphinat, Aluminiumoxid oder Siliziumdioxid eingesetzt, wobei Talkum besonders bevorzugt ist, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden.

Als Säurefänger werden bevorzugt Hydrotalcit, Kreide, Böhmit oder Zinkstannate eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpolymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

E.1.2 1 bis 50 Gew.-% Vinylcyanide (ungesättigte Nitrile wie Acrylnitril und Methacrylnitril) und/oder (Meth)Acryl-

säure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, $\alpha$ -Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet AcrylnitrilButadien-Styrol-Copolymerisat mit der CAS- Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 μm, besonders bevorzugt bei kleiner 15 μm, insbesondere bevorzugt bei kleiner 10 μm bestimmt mit einem CILAS GRANULOMETER.

Wie bereits oben bei der Komponente c) beschrieben, kann in einer bevorzugten Einsatzform der Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe.

In einer bevorzugten Ausführungsform betrifft die vorliegende Zusammensetzungen enthaltend PA66 und PA46 sowie Glasfasern und wenigstens einen Thermostabilisator ausgewählt aus der Gruppe der sterisch gehinderten Phenole der Formel (II),

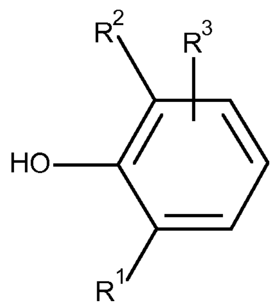

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht, bevorzugt wenigstens einen Thermostabilisator ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-l-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin, besonders bevorzugt wenigstens einen Thermostabilisator ausgewählt aus der Gruppe 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und N,N'-Hexamethylen-bis-3,5-di-tert.-butyl-4-hydroxyhydrocinnamid (Irganox® 1098), insbesondere N,N'-Hexamethylen-bis-3,5-di-tert.-butyl-4-hydroxyhydrocinnamid.

In einer bevorzugten Ausführungsform betrifft die vorliegende Erfindung Zusammensetzungen enthaltend PA66 und PA6T/6 sowie Glasfasern und wenigstens einen Thermostabilisator ausgewählt aus der Gruppe der sterisch gehinderten Phenole der Formel (II),

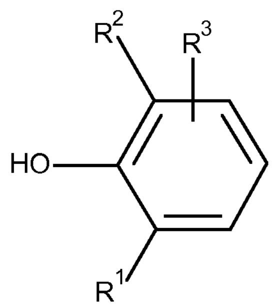

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht, bevorzugt wenigstens einen Thermostabilisator ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis- [3 -(3,5-di-tert. -butyl-4-hydroxyphenyl)-propionat], Distearyl-3,5-di-tert.-butyl-4-hydroxybenzylphosphonat, 2,6,7-Trioxa-l-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin, besonders bevorzugt wenigstens einen Thermostabilisator ausgewählt aus der Gruppe 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und N,N'-Hexamethylen-bis-3,5-di-tert.-butyl-4-hydroxyhydrocinnamid (Irganox® 1098), insbesondere N,N'-Hexamethylen-bis-3,5-di-tert.-butyl-4-hydroxyhydrocinnamid.

Die vorliegende Erfindung betrifft aber auch die Verwendung der erfindungsgemäßen Zusammensetzungen in Form von Formmassen zur Herstellung kurzzeitwärmeformbeständiger Erzeugnisse, bevorzugt elektronischer und elektronischer Baugruppen und Komponenten, insbesondere bevorzugt optoelektronischer Erzeugnisse.

Zur Herstellung erfindungsgemäß für den Spritzguss oder für die Extrusion einzusetzende Formmassen erhält man indem man die einzelnen Komponenten der erfindungsgemäßen Zusammensetzungen vermischt, zu einem Strang austrägt, bis zur Granulierfähigkeit abkühlt und granuliert.

Bevorzugt erfolgt das Vermischen bei Temperaturen im Bereich von 260 bis 295°C in der Schmelze. Insbesondere bevorzugt wird hierzu ein Zweiwellenextruder eingesetzt.

In einer bevorzugten Ausführungsform wird das Granulat, das die erfindungsgemäße Zusammensetzung enthält, bei 80 °C im Trockenlufttrockner oder Vakuumtrockenschrand für ca. 2-6 h getrocknet, bevor es dem Spritzguss oder einem Extrusionsverfahren zwecks Herstellung von Erzeugnissen unterzogen wird.

Die vorliegende Erfindung betrifft aber auch ein Verfahren zur Herstellung von Erzeugnissen, bevorzugt kurzzeitwärmeformbeständiger Erzeugnisse, für die Elektro- oder Elektronikindustrie, besonders bevorzugt elektronischer oder elektrischer Baugruppen und Komponenten, wobei das Matrixmaterial als Formmasse enthaltend die erfindungsgemäßen Zusammensetzungen durch Spritzguss oder Extrusion, bevorzugt durch Spritzguss erhalten wird.

Die vorliegende Erfindung betrifft aber auch ein Verfahren zur Verbesserung der Kurzzeitwärmeformbeständigkeit Polyamid-basierter Erzeugnisse, dadurch gekennzeichnet, dass man erfindungsgemäße Zusammensetzungen in Form von Formmassen durch Spritzguss oder Extrusion verarbeitet.

Die Verfahren des Spritzgusses sowie der Extrusion thermoplastischer Formmassen ist dem Fachmann bekannt.

Erfindungsgemäße Verfahren zur Herstellung von Erzeugnissen durch Extrusion oder Spritzguss arbeiten bei Schmelzetemperaturen im Bereich von 260 bis 330°C, bevorzugt im Bereich von 265 bis 300°C, besonders bevorzugt im Bereich von 275 bis 295°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet Einschneckenextruder und Doppelschneckenextruder Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Kurzzeitformbeständige Erzeugnisse, erhältlich durch Extrusion, bevorzugt Profil-Extrusion, oder Spritzguss der aus den erfindungsgemäßen Zusammensetzungen erhältlichen Formmassen.

Die vorliegende Erfindung betrifft aber auch ein Verfahren zur Herstellung kurzzeitwärmeformbeständiger Erzeugnisse, dadurch gekennzeichnet, dass PA66 in Kombination mit wenigstens einem thermoplastischen Polyamid aus der Gruppe Polyamid 46 oder der teilaromatischen Copolyamide mit Terephthalsäure und einem Schmelzpunkt im Bereich von 270° C bis 330° C enthaltende Zusammensetzungen zu Formmassen verarbeitet im Spritzguss oder mittels Extrusion verarbeitet werden.

Die vorliegende Erfindung betrifft bevorzugt ein Verfahren zur Herstellung kurzzeitwärffieformbeständiger Erzeugnisse, dadurch gekennzeichnet, dass Zusammensetzungen enthaltend

a) 15 bis 90 Gew.- % bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% wenigstens eines thermoplastischen Polyamids aus der Gruppe Polyamid 46 und/oder der teilaromatischen Copolyamide enthaltend Terephthalsäure als Monomerbaustein und einem Schmelzpunkt im Bereich von 270° C bis 330° C liegt, wobei der Anteil dieser Komponente b) bzw. Komponenten b) bezogen auf die Summe aller enthaltener thermoplastischen Polymere in der Zusammensetzung bei 5 bis 40 Gew-%, bevorzugt, 10 bis 30 Gew-%, besonders bevorzugt bei 15-25% liegt,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew.-% wenigstens eines Thermostabilisators,

wobei die Summe aller Gewichtsprozente stets 100 ergibt und diese zusätzlich zu den Komponenten a), b), c) und d) noch e) 0,1 bis 5 Gew.-% Dipentyerythritol und/oder Tripentaerythritol enthalten, wobei die übrigen Komponenten soweit reduziert werden, dass die Summe aller Gewichtsprozente stets 100 ergibt, zu Formmassen verarbeitet werden und diese einem Spritzguss oder einer Extrusion unterzogen werden.

Die durch die genannten Verfahren erhältlichen Erzeugnisse zeigen überraschenderweise eine hervorragende Kurzzeitwärmebeständigkeit, insbesondere in Lötprozessen, sowie optimierte Eigenschaften in den mechanischen Eigenschaften. Die aus den erfindungsgemäßen Zusammensetzungen herzustellenden Formmassen für den Spritzguss und die Extrusion zeichnen sich darüber hinaus durch eine gegenüber dem Stand der Technik gute Verarbeitbarkeit aus.

Die vorliegende Erfindung betrifft aber auch die Verwendung der erfindungsgemäßen Zusammensetzungen zur Steigerung der Kurzzeitwärmeformbeständigkeit von Erzeugnissen, bevorzugt von Erzeugnissen der Elektro- oder Elektronikindustrie, insbesondere von optoelektronischen Erzeugnissen.

Die auf erfindungsgemäße Weise hergestellten Erzeugnisse eignen sich deshalb hervorragend für elektrische oder elektronische Erzeugnisse, insbesondere elektronische Bauteile, die auf Leiterplatten aufgebracht werden, wie z.B. Gehäuse für Spulenkörper, Transistoren, Schalter und Steckverbinder, aber auch für optoelektronische Erzeugnisse, insbesondere LEDs oder OLEDs. Eine Leuchtdiode (auch Lumineszenz-Diode, englisch light-emitting diode, deutsch lichtemittierende Diode, LED) ist ein elektronisches Halbleiter-Bauelement. Fließt durch die Diode Strom in Durchlassrichtung, so strahlt sie Licht, Infrarotstrahlung (als Infrarotleuchtdiode) oder auch Ultraviolettstrahlung mit einer vom Halbleitermaterial und der Dotierung abhängigen Wellenlänge ab. Eine organische Leuchtdiode (englisch organic light emitting diode, OLED) ist ein dünnfilmiges leuchtendes Bauelement aus organischen halbleitenden Materialien, das sich von den anorganischen Leuchtdioden (LED) dadurch unterscheidet, dass Stromdichte und Leuchtdichte geringer sind und keine einkristallinen Materialien erforderlich sind. Im Vergleich zu herkömmlichen (anorganischen) Leuchtdioden lassen sich organische Leuchtdioden daher kostengünstiger herstellen, ihre Lebensdauer ist jedoch derzeit geringer als die herkömmlicher Leuchtdioden.

## Beispiele

Zur Herstellung der erfindungsgemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland) bei Temperaturen zwischen 275 und 295°C in der Schmelze vermischt, als Strang ausgetragen, bis zur Granulierfähigkeit abgekühlt und granuliert. Vor weiteren Schritten wurde das Granulat bei 80°C im Vakuumtrockenschrank für ca. 2-6 h getrocknet.

Die Platten und Prüfkörper für die in der Tabelle 1 aufgeführten Untersuchungen wurden auf einer handelsüblichen Spritzgießmaschine bei einer Massetemperatur von 280 - 290°C und einer Werkzeugtemperatur von 80-120°C verspritzt.

### Biegefestigkeit, Biegemodul und Glühdrahtentzündungstemperatur

Die Prüfung der Biegefestigkeit (Einheit MPa) und des Biegemoduls (Einheit Pa) erfolgte in Analogie zu ISO178. Die Bestimmung der Glühdrahtentzündlichkeitstemperatur (GWIT) in Analogie zu IEC60695-2-13 Angeben in Grad Celsius).

### Wärmeformbeständigkeit

Die Prüfung der Wärmeformbeständigkeit (HDT) erfolgte in Analogie zu ISO75 mit einer Biegespannung von 1,8N/mm$^2$ (Verfahren A)

### Kurzzeitwärmeformbeständigkeit

Der Test zur Bestimmung der Kurzzeitwärmeformbeständigkeit bzw. Lötbadbeständigkeit simuliert die Bedingungen des Wellenlötens wie folgt:
Aus einer Platte mit einer Dicke von 1,0 mm wurden Prüfkörper der Abmaße 20 x 10 x 1 mm ausgeschnitten. Diese wurden auf einer Glasplatte für 15 min in einen mit der in Tabelle 1 angegebenen Temperatur beheizten handelsüblichen Heißluftofen verbracht. Anschließend wurde das Anschmelzverhalten der Probekörper visuell begutachtet. "+" steht

dabei für eine Probe ohne visuell beobachtbares Anschmelzen und keinerlei Anheften an der Glasplatte, "o" für eine Probe mit leicht abgerundeten Kanten und leichter Anhaftung an der Glasplatte und "-" für eine stärker deformierte Oberfläche und starker Anhaftung an der Glasplatte.

**Einsatzstoffe**

Komponente a1: PA66 (Durethan® A30 000000, Lanxess Deutschland GmbH, Köln, Deutschland)

Komponente bl: PA46 (Stanyl® TE300 der DSM Geleen, Niederlande)

Komponente c1: Mit silanhaltigen Verbindungen beschlichtete Glasfaser mit einem Durchmesser von 10 μm (CS 7967, Handelsprodukt der Lanxess N.V., Antwerpen, Belgien)

Komponente d1: Irganox® 1098 der BASF SE, Ludwigshafen, Deutschland

Komponente f1: Flammschutzmittelkombination bestehend aus 75% Exolit® OP1230 der Clariant International Ltd., Muttenz, Schweiz, 20% Melapur® 200/70 der BASF SE Ludwqigshafen, Deutschland und 5% Firebrake 500 (Fa. RioTinto Minerals, Greenwood Village, USA)

Komponente h1: weitere für die Verwendung in Polyamiden gebräuchliche Additive wie zum Beispiel Entformungsmittel (z.B. Ethylenbisamidtetrastearat), Nukleierungsmittel (z.B. auf Basis von Talkum). Art und Menge der als Komponente h) zusammengefassten Additive stimmten in Art und Menge für Beispiele und Vergleichsbeispiele überein.

Tabelle 1 zeigt, dass bei thermisch empfindlichen Flammschutzmittelsystemen wie Komponente f1 nur im Falle der erfindungsgemäßen Polyamidblends sowohl eine gute Verarbeitbarkeit als auch eine erhöhte Kurzzeitwärmeformbeständigkeit bei Temperaturen oberhalb des Schmelzpunktes von Komponente a1 gegeben ist. Dies ist eine wichtige Voraussetzung für Anwendungen, die wie z.B. Elektronikbauteile, kurzzeitig Lötbadtemperaturen bis 285 °C ausgesetzt sein können. Festzustellen ist auch die erhöhte Glühdrahtentzündlichkeit und eine vorteilhaftere Mechanik bei Verwendung der erfindungsgemäßen Zusammensetzungen in daraus herzustellenden Erzeugnissen.

**Tabelle 1:** Polyamidblends mit thermisch empfindlichen Flammschutzmitteln

| | Vgl. 1 | Vgl. 2 | Bsp. 1 | Bsp. 2 |
|---|---|---|---|---|
| Komponente a1) | 50,7 | 10,7 | 40,7 | 35,7 |
| Komponente b1) | | 40 | 10 | 15 |
| Komponente c1) | 30 | 30 | 30 | 30 |
| Komponente d1) | 0,5 | 0,5 | 0,5 | 0,5 |
| Komponente f1) | 18,5 | 18,5 | 18,5 | 18,5 |
| Komponente h1) | 0,3 | 0,3 | 0,3 | 0,3 |
| GWIT bei 1,5mm | 725 | * | 750 | 775 |
| Biegemodul | 10353 | * | 10535 | 10641 |
| Biegefestigkeit | 225 | * | 229 | 233 |
| HDT A | 242 | * | 244 | 245 |
| Kurzzeitwärmeformbeständigkeit 265°C | + | * | + | + |
| Kurzzeitwärmeformbeständigkeit 275° C | o | * | + | + |
| Kurzzeitwärmeformbeständigkeit 285° C | - | * | o | o |
| Kurzzeitwärmeformbeständigkeit 295° C | - | * | o | o |
| Verarbeitbarkeit bei 290° C | + | - | + | + |
| * Wegen schwieriger Verarbeitbarkeit keine Prüfkörper herstellbar; die Mengenangeben zu den einzelnen Komponenten sind in Gew.-%. | | | | |

## Patentansprüche

1. Zusammensetzungen enthaltend

   a) 15 bis 90 Gew.- % Polyamid 66,
   b) 3 bis 30 Gew.-% wenigstens eines thermoplastischen Polyamids aus der Gruppe Polyamid 46 und/oder der teilaromatischen Copolyamide enthaltend Terephthalsäure als Monomerbaustein und einem Schmelzpunkt im Bereich von 270° C bis 330° C, wobei der Anteil dieser Komponente b) bzw. Komponenten b) bezogen auf die Summe aller enthaltener thermoplastischen Polymere in der Zusammensetzung bei 5 bis 40 Gew-%, liegt,
   c) 5 bis 70 Gew.-% Glasfasern, und
   d) 0,01 bis 3 Gew.-% wenigstens eines Thermostabilisators,

   wobei die Summe aller Gewichtsprozente stets 100 ergibt und dass diese zusätzlich zu den Komponenten a), b), c) und d) noch e) 0,01 bis 5 Gew.-% Dipentaerythritol und/oder Tripentaerythritol enthalten, wobei die übrigen Komponenten soweit reduziert werden, dass die Summe aller Gewichtsprozente stets 100 ergibt.

2. Zusammensetzungen gemäß Anspruch 1, **dadurch gekennzeichnet, dass** diese zusätzlich zu den Komponenten a), b), c), d) und e) oder anstelle von e) noch f) 1 bis 55 Gew.-% wenigstens eines Flammschutzmittels enthalten, wobei die übrigen Komponenten soweit reduziert werden, dass die Summe aller Gewichtsprozente stets 100 ergibt.

3. Zusammensetzungen gemäß einem der Ansprüche 1 oder 2, **dadurch gekennzeichnet, dass** diese zusätzlich zu den Komponenten a) bis f) oder anstelle der Komponenten e) und/oder f) noch g) 0,01 bis 10 Gew.-% wenigstens eines Additivs mit zwei Epoxygruppen pro Molekül enthalten, wobei die übrigen Komponenten soweit reduziert werden, dass die Summe aller Gewichtsprozent stets 100 ergibt.

4. Zusammensetzungen gemäß einem der Ansprüche 1 bis 3, **dadurch gekennzeichnet, dass** diese zusätzlich zu den Komponenten a) bis g) oder anstelle der Komponenten e) und/oder f) und/oder g) noch h) 0,01 bis 20 Gew.-% wenigstens eines von den Komponenten c) bis g) unterschiedlichen Additivs enthalten, wobei die übrigen Komponenten soweit reduziert werden, dass die Summe aller Gewichtsprozente stets 100 ergibt.

5. Zusammensetzungen gemäß einem der Ansprüche 1 bis 4, **dadurch gekennzeichnet, dass** Thermostabilisatoren enthaltend wenigstens eine Struktur der Formel (II) eingesetzt werden,

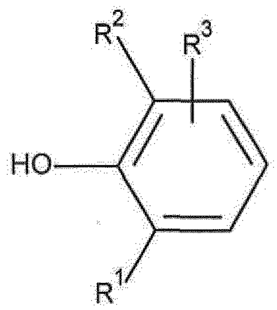

(II)

   worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht,

6. Zusammensetzungen gemäß Anspruch 5, **dadurch gekennzeichnet, dass** als Thermostabilisatoren Verbindungen der Formel (III) eingesetzt werden

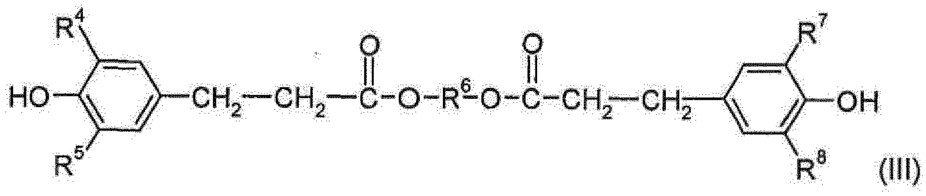

(III)

wobei $R^4$, $R^5$, $R^7$ und $R^8$ unabhängig voneinander $C_1$-$C_8$-Alkylgruppen darstellen, die ihrerseits substituiert sein können und $R^6$ einen zweiwertigen aliphatischen Rest mit 1 bis 10 C-Atomen bedeutet, der in der Hauptkette auch C-O-Bindungen aufweisen kann.

7. Zusammensetzungen gemäß Anspruch 6, **dadurch gekennzeichnet, dass** die Thermostabilisatoren aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-l- phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert,-butyl-4-hydroxymethylphenol, 1,3,5-Trimethyl-2,4,6-tris-(3,5-di-tert,-butyl-4-hydroxybenzyl)-benzol, 4,4-Methylen-bis-(2,6-di-tert.-butytphenol), 3,5-Di-tert.-butyl-4-hydroxybenzyldimethylamin ausgewählt werden.

8. Zusammensetzungen gemäß einem der Ansprüche 5 bis 7, **dadurch gekennzeichnet, dass** die Thermostabilisatoren aus der Gruppe 2,2'-Methylen-bis-(4-methyl-6-tert,-butylphenol), 1 ,6-Hexandiol-bis-(3,5-di-tert.-butyl-4-hydroxyphenyl]-propionat, Pentaerythrityl-tetrakis-[3-(3,5-di-tert.-butyl-4-hydroxyphenyl)-propionatl und N,N'-Hexamethylen-bis-3,5-di-tert.-butyl-4-hydroxyhydrocinnamid ausgewählt werden.

9. Zusammensetzungen gemäß einem der Ansprüche 4 bis 8, **dadurch gekennzeichnet, dass** als Additiv das Pigment Titandioxid eingesetzt wird.

10. Erzeugnisse erhältlich durch Extrusion oder Spritzguss von Formmassen enthaltend die Zusammensetzungen gemäß einem der Ansprüche 1 bis 9.

11. Erzeugnisse gemäß Anspruch 10, **dadurch gekennzeichnet, dass** es sich um Erzeugnisse für die Elektro- oder Elektronikindustrie handelt.

12. Verwendung der Zusammensetzungen gemäß einem der Ansprüche 1 bis 10, zur Herstellung von Erzeugnissen für die Elektro- oder Elektronikindustrie.

13. Verwendung gemäß Anspruch 12, **dadurch gekennzeichnet, dass** es sich bei den Erzeugnissen um optoelektronische Erzeugnisse handelt.

## Claims

1. Compositions containing

a) 15 to 90% by weight of nylon-6,6,
b) 3 to 30% by weight of at least one thermoplastic polyamide from the group comprising nylon-4,6 and/or semiaromatic copolyamides containing terephthalic acid as monomer unit and having a melting point in the range from 270°C to 330°C, wherein the proportion of said constituent(s) b) based on the sum of all thermoplastic polymers contained in the composition is 5 to 40% by weight,
c) 5 to 70% by weight of glass fibres, and
d) 0.01 to 3% by weight of at least one heat stabilizer,

wherein the sum of all percentages by weight always adds up to 100 and that, in addition to constituents a), b), c), and d), these also contain e) 0.01 to 5% by weight of dipentaerythritol and/or tripentaerythritol, wherein the remaining constituents are reduced such that the sum of all percentages by weight always adds up to 100.

2. Compositions according to Claim 1, **characterized in that**, in addition to constituents a), b), c), d), and e) or instead of e), these also contain f) 1 to 55% by weight of at least one flame retardant, wherein the remaining constituents are reduced such that the sum of all percentages by weight always adds up to 100.

3. Compositions according to either of Claims 1 or 2, **characterized in that**, in addition to constituents a) to f) or instead of constituents e) and/or f), these also contain g) 0.01 to 10% by weight of at least one additive having two epoxy groups per molecule, wherein the remaining constituents are reduced such that the sum of all percentages by weight always adds up to 100.

4. Compositions according to any of Claims 1 to 3, **characterized in that**, in addition to constituents a) to g) or instead of constituents e) and/or f) and/or g), these also contain h) 0.01 to 20% by weight of at least one additive different to constituents c) to g), wherein the remaining constituents are reduced such that the sum of all percentages by weight always adds up to 100.

5. Compositions according to any of Claims 1 to 4, **characterized in that** heat stabilizers containing at least one structure of formula (II) are used,

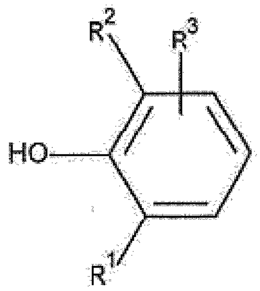

(II)

in which $R^1$ and $R^2$ represent an alkyl moiety, a substituted alkyl group or a substituted triazole group, wherein the radicals $R^1$ and $R^2$ may be identical or different and $R^3$ represents an alkyl group, a substituted alkyl group, an alkoxy group or a substituted amino group.

6. Compositions according to Claim 5, **characterized in that** compounds of formula (III) are used as heat stabilizers,

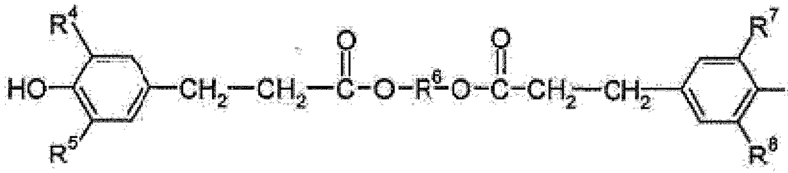

(III)

wherein $R^4$, $R^5$, $R^7$ and $R^8$ independently represent $C_1$-$C_8$ alkyl moieties, which may themselves be substituted, and $R^6$ represents a divalent aliphatic radical having 1 to 10 carbon atoms that may additionally have C-O bonds in the main chain.

7. Compositions according to Claim 6, **characterized in that** the heat stabilizers are selected from the group comprising 2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)-propionate], distearyl 3,5-di-tert-butyl-4-hydroxybenzylphosphonate, 2,6,7-trioxa-1-phosphabicyclo[2.2.2]oct-4-ylmethyl-3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

8. Compositions according to any of Claims 5 to 7, **characterized in that** the heat stabilizers are selected from the

group comprising 2,2'-methylenebis(4-methyl-6-tert-butylphenol), 1,6-hexanediol bis(3,5-di-tert-butyl-4-hydroxyphenyl]propionate, pentaerythrityl tetrakis[3-(3,5-di-tert-butyl-4-hydroxyphenyl)propionate), and N,N'-hexamethylenebis-3,5-di-tert-butyl-4-hydroxyhydrocinnamide.

**9.** Compositions according to any of Claims 4 to 8, **characterized in that** the pigment titanium dioxide is used as additive.

**10.** Products obtainable by extrusion or injection moulding of moulding compounds containing the compositions according to any of Claims 1 to 9.

**11.** Products according to Claim 10, **characterized in that** they are products for the electrical or electronics industry.

**12.** Use of the compositions according to Claims 1 to 10 for producing products for the electrical or electronics industry.

**13.** Use according to Claim 12, **characterized in that** the products are optoelectronic products.

## Revendications

**1.** Compositions contenant

a) 15 à 90 % en poids de polyamide 66,
b) 3 à 30 % en poids d'au moins un polyamide thermoplastique du groupe du polyamide 46 et/ou des copolyamides partiellement aromatiques contenant l'acide téréphtalique en tant qu'élément monomère et un point de fusion dans la plage de 270 °C à 330 °C, la proportion de ce composant b) ou, selon le cas, des composants b) par rapport à la somme de tous les polymères thermoplastiques contenus dans la composition, étant de 5 à 40 % en poids,
c) 5 à 70 % en poids de fibres de verre, et
d) 0,01 à 3 % en poids d'au moins un stabilisateur thermique,

la somme de tous les pourcentages en poids donnant toujours 100 et que celles-ci contiennent en plus des composants a), b), c) et d), encore e) 0,01 à 5 % en poids de dipentaérythritol et/ou de tripentaérythritol, les autres composants étant réduits suffisamment, pour que la somme de tous les pourcentages en poids donne toujours 100.

**2.** Compositions selon la revendication 1, **caractérisées en ce qu'**elles contiennent en plus des composants a), b), c), d) et e) ou bien à la place de e), encore f) 1 à 55 % en poids d'au moins un agent ignifugeant, les autres composants étant réduits suffisamment, pour que la somme de tous les pourcentages en poids donne toujours 100.

**3.** Compositions selon l'une quelconque des revendications 1 et 2, **caractérisées en ce qu'**elles contiennent en plus des composants a) à f), ou à la place des composants e) et/ou f), encore g) 0,01 à 10 % en poids d'au moins un additif comportant deux groupes époxy par molécule, les autres composants étant réduits suffisamment, pour que la somme de tous les pourcentages en poids donne toujours 100.

**4.** Compositions selon l'une quelconque des revendications 1 à 3, **caractérisées en ce qu'**elles contiennent en plus des composants a) à g), ou à la place des composants e) et/ou f) et/ou g) encore h) 0,01 à 20 % en poids d'au moins un additif différent des composants c) à g), les autres composants étant réduits suffisamment, pour que la somme de tous les pourcentages en poids donne toujours 100.

**5.** Compositions selon l'une quelconque des revendications 1 à 4, **caractérisées en ce que** des stabilisateurs thermiques contenant au moins une structure de formule (II), sont utilisés

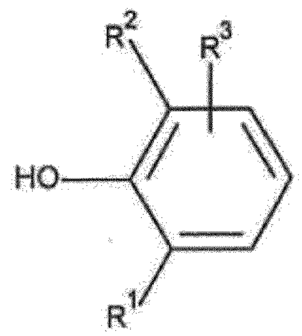

(II)

dans laquelle R et $R^2$ représentent un groupe alkyle, un groupe alkyle substitué ou un groupe triazole substitué, les radicaux $R^1$ et $R^2$ pouvant être identiques ou différents, et $R^3$ représente un groupe alkyle, un groupe alkyle substitué, un groupe alcoxyle ou un groupe amino substitué.

**6.** Compositions selon la revendication 5, **caractérisées en ce qu'**en tant que stabilisateurs thermiques, des composés de formule (III) sont utilisés

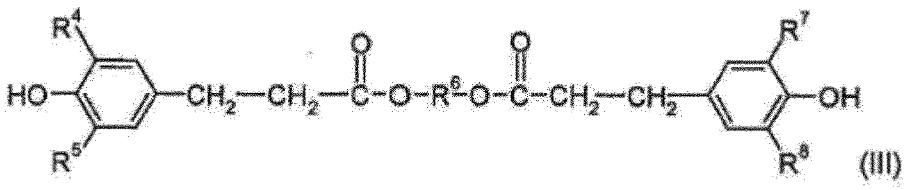

(III)

$R^4$, $R^5$, $R^7$ et $R^8$ désignant indépendamment les uns des autres des groupes Ci-g-alkyle, qui peuvent être à leur tour substitués et $R^6$ signifiant un radical aliphatique divalent comportant 1 à 10 atomes de C, qui peut présenter aussi des liaisons C-O dans la chaîne principale.

**7.** Compositions selon la revendication 6, **caractérisées en ce que** les stabilisateurs thermiques sont choisis dans le groupe 2,2'-méthylène-bis(4-méthyl-6-tert-butylphénol), bis[3-(3,5-di-tert-butyl-4-hydroxyphényl)propionate] de 1,6-hexanediyle, tétrakis[3-(3,5-di-tert-butyl-4-hydroxyphényl)propionate] de pentaérythrityle, 3,5-di-tert-butyl-4-hydroxybenzylphosphonate de distéaryle, 3,5-di-tert-butyl-4-hydroxyhydrocinnamate de 2,6,7-trioxa-1-phosphabicyclo[2.2.2]oct-4-yl-méthyle, 3,5-di-tert-butyl-4-hydroxyphényl-3,5-distéarylthiotriazylamine, 2-(2'-hydroxy-3'-hydroxy-3',5'-di-tert-butylphényl)-5-chlorobenzotriazole, 2,6-di-tert-butyl-4-hydroxyméthylphénol, 1,3,5-triméthyl-2,4,6-tris(3,5-di-tert-butyl-4-hydroxybenzyl)benzène, 4,4'-méthylène-bis(2,6-di-tert-butylphénol), 3,5-di-tert-butyl-4-hydroxybenzyldiméthylamine.

**8.** Compositions selon l'une quelconque des revendications 5 à 7, **caractérisées en ce que** les stabilisateurs thermiques sont choisis dans le groupe 2,2'-méthylène-bis(4-méthyl-6-tert-butylphénol), bis(3,5-di-tert-butyl-4-hydroxyphényl]propionate de 1,6-hexanediyle, tétrakis[3-(3,5-di-tert-butyl-4-hydroxyphényl)propionate] de pentaérythrityle et N,N'-hexaméthylène-bis-3,5-di-tert-butyl-4-hydroxyhydrocinnamide.

**9.** Compositions selon l'une quelconque des revendications 4 à 8, **caractérisées en ce que** le pigment dioxyde de titane est utilisé en tant qu'additif.

**10.** Produits pouvant être obtenus par extrusion ou par moulage par injection de masses à mouler contenant les compositions selon l'une quelconque des revendications 1 à 9.

**11.** Produits selon la revendication 10, **caractérisés en ce qu'**il s'agit de produits pour l'industrie électrique ou électronique.

**12.** Utilisation des compositions selon l'une quelconque des revendications 1 à 10, pour la fabrication de produits pour l'industrie électrique ou électronique.

**13.** Utilisation selon la revendication 12, **caractérisée en ce que** les produits sont des produits optoélectroniques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0997496 A1
- DE 102011084519 A1
- EP 299444 A
- EP 1994075 A
- EP 129195 A
- EP 129196 A
- DE 2702661 A
- US 4360617 A
- DE 4236 A
- WO 9817720 A
- US 6538024 B
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A


### In der Beschreibung aufgeführte Nicht-Patentliteratur


- Polyamide. Technische Thermoplaste. Hanser Verlag, 803-809
- **BODO CARLOWITZ.** Tabellarische Übersicht über die Prüfung von Kunststoffen. Giesel-Verlag für Publizität, 1992, 16-17
- Sicherheit elektrischer Geräte für den Hausgebrauch und ähnliche Zwecke Teil 1: Allgemeine Anforderungen. *Europäische Norm EN 60335-1*
- **H. DOMININGHAUS.** Die Kunststoffe und ihre Eigenschaften. VDI-Verlag, 1976, 272 ff
- *Ultramid® (PA) Hauptbroschüre der BASF SE,* August 2013
- *CHEMICAL ABSTRACTS,* 23128-74-7
- *CHEMICAL ABSTRACTS,* 126-58-9
- *CHEMICAL ABSTRACTS,* 78-24-0
- *CHEMICAL ABSTRACTS,* 1078142-02-5
- *CHEMICAL ABSTRACTS,* 225789-38-8
- **GÄCHTER ; MÜLLER.** Kunststoff-Additive. Hanser-Verlag, 1989
- Plastics Additives Handbook. Hanser-Verlag, 2001
- **ULLMANN.** Enzyklopädie der Technischen Chemie. 1980, vol. 19, 280 ff
- *CHEMICAL ABSTRACTS,* 9003-56-9
- **THIELEN ; HARTWIG ; GUST.** Blasformen von Kunststoffhohlkörpern. Carl Hanser Verlag, 2006, 127-129